# EUROPEAN PATENT APPLICATION

(11) **EP 2 103 337 A2**
(43) Date of publication of application: **23.09.2009**
(21) Application number: 09250681.5
(22) Date of filing: 11.03.2009
(51) Int. Cl.: B01D 46/24, F01N 3/022, C04B 41/50, C04B 38/00

(54) **Honeycomb structure**

(30) Priority: 19.03.2008 JP 2008071964; 06.01.2009 JP 2009000980
(71) Applicant: NGK INSULATORS, LTD., Nagoya-city, Aichi 467-8530 (JP)
(72) Inventor: Furuta, Yasuyuki, Nagoya City Aichi-ken 467-8530 (US); Hiramatsu, Takuya, Nagoya City Aichi-ken 467-8530 (US)
(74) Representative: Paget, Hugh Charles Edward

(57) **Abstract**

A honeycomb structure is formed by integrally bonding a plurality of honeycomb-shaped segments. Each of the segments includes a honeycomb-shaped porous base material and a modification portion, the modification portion being formed by impregnating a part of the base material with a slurry that contains particles smaller than an average pore size of the base material, and heating the base material. The base material has a porosity of 30 to 80% and an average pore size of 5 to 40 µm. The modification portion is formed within a length of one-tenth to half of a total length of the segments from an outlet-side end face along an axial direction of the cells. The modification portion has a porosity lower than that of the base material by 2 to 20% and an average pore size smaller than that of the base material by 0.1 to 10 µm.

## Description

### BACKGROUND OF THE INVENTION

### Field of the Invention

The present invention relates to a honeycomb structure suitably used as a dust collection filter such as diesel particulate filter.

### Description of Related Art

A honeycomb structure has been widely used as an exhaust gas collection filter, for example a diesel particulate filter (DPF) that collects and removes particulate matter (PM) such as soot contained in exhaust gas discharged from a diesel engine or the like.

In order to continuously use such a honeycomb structure (filter) for a long period of time, the filter must be regenerated periodically. Specifically, it is necessary to burn and remove PM deposited inside the filter in order to recover the initial filter performance by reducing the pressure loss that has increased due to PM deposited inside the filter with time. Since PM deposited inside the filter is burned sequentially from the fluid (exhaust gas) inlet side during filter regeneration, an increase in temperature is more significant in an area close to the fluid outlet due to heat generated in the upstream area and heat due to PM burning on site. Therefore, increasing levels of temperature in various parts of the filter tend to become non-uniform so that defects such as cracks occur due to thermal stress.

In order to deal with such a problem, a method to disperse and reduce thermal stress acting to a honeycomb structure by producing a honeycomb structure with a plurality of honeycomb-shaped segments and integrally bonding the segments using a bonding material formed of an elastic material has been proposed (see JP-A-2000-279729, for example). This method has improved the thermal impact resistance of the honeycomb structure to a certain extent. However, in recent years, an increase in thermal stress along with a growth in filter size has made it difficult to achieve a sufficient effect merely by using this method. A honeycomb structure in which the non-uniform distribution of combustion heat during filter regeneration is suppressed by reducing the average pore size from the inlet-side end face to the outlet-side end face to prevent PM from being unevenly deposited mainly in an area near the outlet-side end face has been disclosed (see JP-A-01-145378, for example). However, a sufficient effect cannot be achieved merely by reducing the average pore size.

### SUMMARY OF THE INVENTION

The present invention was conceived in view of the above-described situation. An object of the present invention is to provide a honeycomb structure that appropriately suppresses an increase in temperature in an area near the outlet-side end face during filter regeneration and does not show an excessive increase in pressure loss when used as a DPF to exhibit a well-balanced filter performance.

According to the present invention, the following honeycomb structures are provided.

[1] A honeycomb structure formed by combining and integrally bonding a plurality of segments having a honeycomb-shape, in which cells that serve as fluid passages are partitioned by porous partition walls between an inlet-side end face that serves as a fluid inlet and an outlet-side end face that serves as a fluid outlet, in a direction perpendicular to an axial direction of the cells, each of the plurality of segments comprising a base material which is porous and honeycomb-shaped and a modification portion, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of each of the plurality of segments from the outlet-side end face along the axial direction of the cells, the modification portion having the porosity lower than that of the base material by 2 to 20% and the average pore size smaller than that of the base material by 0.1 to 10 µm (first honeycomb structure).

[2] A honeycomb structure according to [1], wherein the modification portion has a uniform length, a uniform porosity, and a uniform average pore size in all of the plurality of segments.

[3] A honeycomb structure according to [1], wherein the plurality of segments include peripheral segments located in a periphery of the honeycomb structure, and central segments located inside the peripheral segments, the peripheral segments and the central segments being different in at least one of the length, the porosity, and the average pore size of the modification portion.

[4] A honeycomb structure formed by combining and integrally bonding a plurality of segments having a honeycomb-shape in which cells that serve as fluid passages being partitioned by porous partition walls between an inlet-side end face that serves as a fluid inlet and an outlet-side end face that serves as a fluid outlet, in a direction perpendicular to an axial direction of the cells,the plurality of segments including peripheral segments located in a periphery of the honeycomb structure and central segments located inside the peripheral segments; the peripheral segments consisting of a base material which is porous and honeycomb-shaped; at least some of the central segments comprising the base material and a modification portion and rest of the central segments consisting of the base material as same as the peripheral segments, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of the central segments from the outlet-side end face along the axial direction of the cells, the modification portion having the porosity lower than that of the base material by 2 to 20% and the average pore size smaller than that of the base material by 0.1 to 10 µm (second honeycomb structure).

[5] A honeycomb structure having cells that serve as fluid passages and are partitioned by porous partition walls between an inlet-side end face that serves as a fluid inlet and an outlet-side end face that serves as a fluid outlet, the honeycomb structure comprising a base material which is porous and honeycomb-shaped and a modification portion, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of the honeycomb structure from the outlet-side end face along an axial direction of the cells, the modification portion having the porosity lower than that of the base material by 2 to 20% and the average pore size smaller than that of the base material by 0.1 to 10 µm (third honeycomb structure).

[6] A honeycomb structure according to [5], wherein the modification portion has a uniform length, a uniform porosity, and a uniform average pore size over the entire honeycomb structure in a diametrical direction.

[7] A honeycomb structure according to [5], wherein at least one of the length, the porosity, and the average pore size of the modification portion changes successively or stepwise from a center to a periphery of the honeycomb structure.

[8] A honeycomb structure having cells that serve as fluid passages and are partitioned by porous partition walls between an inlet-side end face that serves as a fluid inlet and an outlet-side end face that serves as a fluid outlet, the honeycomb structure comprising a base material which is porous and honeycomb-shaped and a modification portion, the modification portion being formed by impregnating a part of the base material with a slurry that contains particles smaller than an average pore size of the base material, and heating the base material; and the modification portion being formed within a length of one-tenth to half of a total length of the honeycomb structure from the outlet-side end face along an axial direction of the cells, the modification portion being formed within an area excluding a range of one-tenth to three-fifths of a radius of the honeycomb structure from a periphery to a center of the honeycomb structure, and having a porosity lower than that of the base material by 2 to 20% and the average pore size smaller than that of the base material by 0.1 to 10 µm (fourth honeycomb structure).

[9] A honeycomb structure according to any one of [1] to [8] comprising plugging portions, wherein openings of given cells on the inlet-side end face are plugged, and openings of remaining cells on the outlet-side end face are plugged.

[10] A honeycomb structure according to [9], wherein the inlet-side end face has an aperture ratio higher than that of the outlet-side end face.

[11] A honeycomb structure according to any one of [1] to [10], wherein the partition walls carry a catalyst component.

According to the honeycomb structure of the present invention, an increase in temperature in an area near the outlet-side end face during filter regeneration can be appropriately suppressed while an excessive increase in pressure loss can be suppressed when using the honeycomb structure as a DPF by limiting the length of the modification portion, namely an area subjected to densification, while limiting the porosity and the average pore size of the base material and those of the modification portion. Therefore, the honeycomb structure exhibits a well-balanced filter performance.

### BRIEF DESCRIPTION OF THE DRAWINGS

FIG. 1 is a schematic cross-sectional view showing one embodiment of the first honeycomb structure according to the present invention.

FIG. 2 is a schematic cross-sectional view showing another embodiment of the first honeycomb structure according to the present invention.

FIG. 3 is a schematic cross-sectional view showing a further embodiment of the first honeycomb structure according to the present invention.

FIG. 4 is a schematic cross-sectional view showing one embodiment of the second honeycomb structure according to the present invention.

FIG. 5 is a schematic plan view of the outlet-side end face showing one embodiment of the second honeycomb structure according to the present invention.

FIG. 6 is a schematic plan view of the outlet-side end face showing another embodiment of the second honeycomb structure according to the present invention.

FIG. 7 is a schematic cross-sectional view showing another embodiment of the second honeycomb structure according to the present invention.

FIG. 8 is a schematic cross-sectional view showing one embodiment of the third honeycomb structure according to the present invention.

FIG. 9 is a schematic cross-sectional view showing another embodiment of the third honeycomb structure according to the present invention.

FIG. 10 is a schematic cross-sectional view showing a further embodiment of the third honeycomb structure according to the present invention.

FIG. 11 is a schematic cross-sectional view showing one embodiment of the fourth honeycomb structure according to the present invention.

FIG. 12 is a schematic oblique view showing an example of the basic structure of the first and second honeycomb structures according to the present invention.

FIG. 13 is a schematic oblique view showing an example of the honeycomb segment that forms the first and second honeycomb structures according to the present invention.

FIG. 14 is a schematic oblique view showing another example of the honeycomb segment that forms the first and second honeycomb structures according to the present invention.

FIG. 15 is a schematic oblique view showing an example of the basic structure of the third and fourth honeycomb structures according to the present invention.

FIG 16 is a schematic partial plan view showing an example of the third and fourth honeycomb structures according to the present invention viewed from one end face.

FIG. 17 is a schematic partial plan view showing another example of the third and fourth honeycomb structures according to the present invention viewed from one end face.

FIG. 18 is a partial enlarged view of the inlet-side end face showing one embodiment of the honeycomb structure in which the inlet-side end face and the outlet-side end face differ in the aperture ratio.

FIG. 19 is a partial enlarged view of the outlet-side end face showing one embodiment of the honeycomb structure in which the inlet-side end face and the outlet-side end face differ in the aperture ratio.

### DESCRIPTION OF PREFERRED EMBODIMENTS

Preferred embodiments of the present invention are described below. Note that the present invention should not be construed as being limited to the following embodiments. Various modifications and improvements may be made without departing from the scope of the present invention based on knowledge of a person having an ordinary skill in the art.

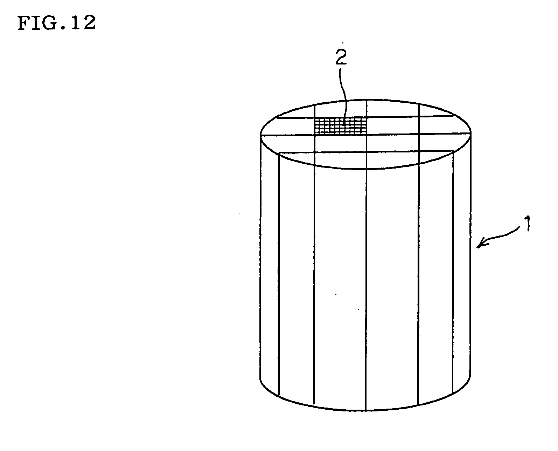

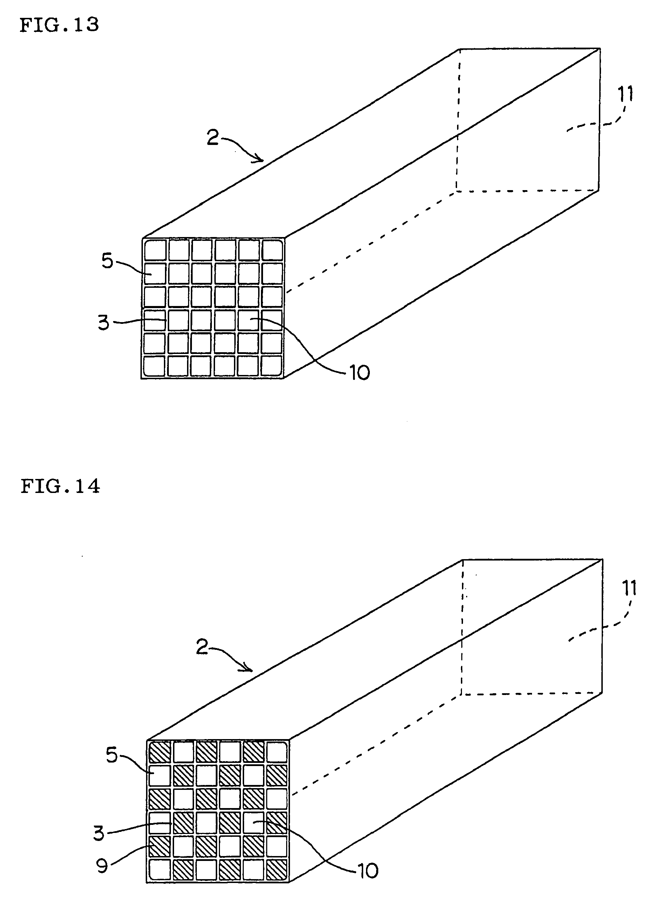

The first and second honeycomb structures according to the present invention are formed by combining a plurality of honeycomb-shaped segments (honeycomb segments), and integrally bonding the honeycomb segments. FIG. 12 is a schematic oblique view showing an example of the basic structure of the first and second honeycomb structures according to the present invention, and FIG. 13 is a schematic oblique view showing an example of the honeycomb segment that form the first and second honeycomb structures according to the present invention.

As shown in FIG 13, a honeycomb segment 2 has an inlet-side end face 10 that serves as a fluid inlet, and an outlet-side end face 11 that serves as a fluid outlet. A plurality of cells (through-holes) 5 that serve as fluid passages are partitioned by a porous partition wall 3 between the inlet-side end face 10 and the outlet-side end face 11. When using the honeycomb segment as a filter such as DPF, plugging portions are generally disposed so that the openings of given cells are plugged on the inlet-side end face and the openings of the remaining cells are plugged on the outlet-side end face. As shown in FIG. 14, the cells are normally plugged so that one end face of the honeycomb segment is plugged by plugging portions 9 in a checkered pattern and the other end face of the honeycomb segment is plugged by plugging portions in a complementary checkered pattern. Specifically, the plugging portions are formed so that the openings of the adjacent cells are plugged on opposite end faces.

A fluid containing PM (e.g., soot) flows into the honeycomb structure that includes the plugged honeycomb segments through one end face (inlet-side end face) of the honeycomb structure via the cells that are not plugged on that end face, passes through the porous partition wall having a filtration capability, and flows into the cells that are not plugged on the other end face (outlet-side end face). PM contained in the fluid is collected by the partition wall when the fluid passes through the partition wall, and the purified fluid from which PM has been removed is discharged through the other end face.

As shown in FIG. 12, the first and second honeycomb structures (reference numeral 1) according to the present invention are formed by combining a plurality of the above-described honeycomb segments 2 perpendicularly to the axial direction of the cells, and integrally bonding the honeycomb segments 2. The honeycomb segments 2 are bonded using a bonding material. It is preferable to use a bonding material that includes a filler (e.g., ceramic fibers or ceramic particles) having heat resistance and an inorganic adhesive (e.g., colloidal silica) as the main components, and is prepared in the form of a paste by mixing and kneading the filler and the inorganic adhesive optionally with an organic binder (e.g., methyl cellulose (MC) or carboxymethyl cellulose (CMC)), a dispersant, water, and the like using a kneader (e.g., mixer).

After applying the bonding material to the bonding surface of each honeycomb segment to a given thickness, the honeycomb segments are combined. The bonding material is then dried and cured to produce a honeycomb structure in which the honeycomb segments are integrally bonded. The periphery of the honeycomb structure may be optionally ground into the desired shape (e.g., columnar shape). In this case, since the outer circumferential wall of the honeycomb structure is removed so that the partition wall and the cells are exposed, it is preferable to form the outer circumferential wall by covering the exposed surface with a coating material, for example.

The honeycomb segment used for the first honeycomb structure according to the present invention includes a honeycomb-shaped porous base material, and a modification portion (densification portion) that is formed by impregnating a part of the base material with a slurry that contains particles smaller than the average pore size of the base material, and heating the base material. Regarding the honeycomb segments used for the second honeycomb structure according to the present invention, a peripheral segment positioned in the periphery of the honeycomb structure and a central segment positioned inside the peripheral segment differ as to the presence or absence of the modification portion. Specifically, all of the peripheral segments are formed only of the base material. On the other hand, at least some of the central segments include the base material and the modification portion that is formed by impregnating a part of the base material with a slurry that contains particles smaller than the average pore size of the base material and heating the base material, and the remaining central segments are formed only of the base material.

When using the honeycomb structure according to the present invention as a DPF, the modification portion appropriately suppresses an increase in temperature by increasing the heat capacity and the thermal conductivity in an area near the outlet-side end face in which the temperature tends to increase to a large extent during filter regeneration to improve the thermal impact resistance. In the first and second honeycomb structures according to the present invention, the formation area of the modification portion is limited in order to prevent a situation in which a pressure loss increases to a large extent due to the modification portion. Specifically, the formation area of the modification portion is within the range of one-tenth to half of the total length of the honeycomb segment from the outlet-side end face of the honeycomb segment along the axial direction of the cells. If the formation area of the modification portion is below one-tenth of the total length of the honeycomb segment, it is difficult to achieve a heat capacity and a thermal conductivity that effectively suppress an excessive increase in temperature in an area near the outlet-side end face during filter regeneration. If the formation area of the modification portion exceeds half of the total length of the honeycomb segment, a pressure loss increases to a large extent due to the modification portion so that the honeycomb structure cannot be utilized as a filter.

An increase in temperature in an area near the outlet-side end face during filter regeneration can be appropriately suppressed while suppressing an excessive increase in pressure loss by thus limiting the formation area of the modification portion while limiting the porosity and the average pore size of the base material and the porosity and the average pore size of the modification portion that significantly affect a pressure loss as described later. As a result, a honeycomb structure having a well-balanced filter performance can be obtained. In the second honeycomb structure according to the present invention, an increase in pressure loss due to the modification portion can be more easily suppressed by forming the modification portion in at least some of the honeycomb segments.

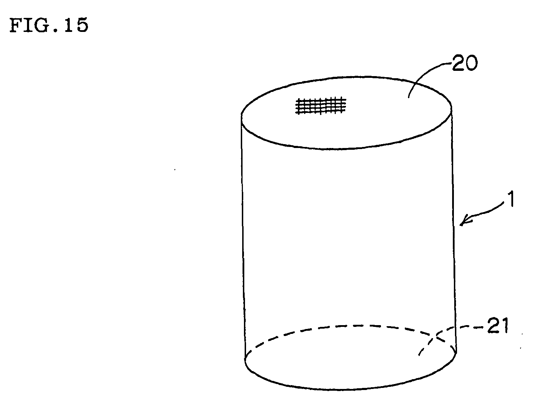

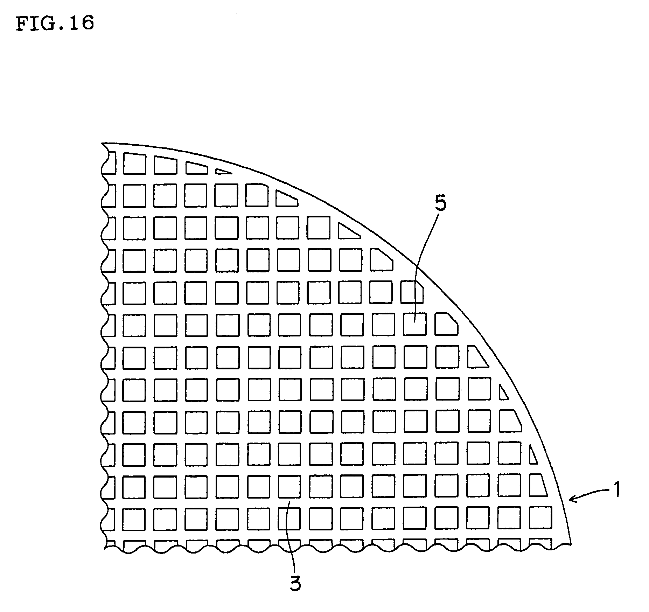

While the first and second honeycomb structures according to the present invention are formed by bonding a plurality of honeycomb segments, the third and fourth honeycomb structures according to the present invention have a monolithic (integral) structure. FIG 15 is a schematic oblique view showing an example of the basic structure of the third and fourth honeycomb structures according to the present invention, and FIG. 16 is a schematic partial plan view showing an example of the third and fourth honeycomb structures according to the present invention viewed from one end face.

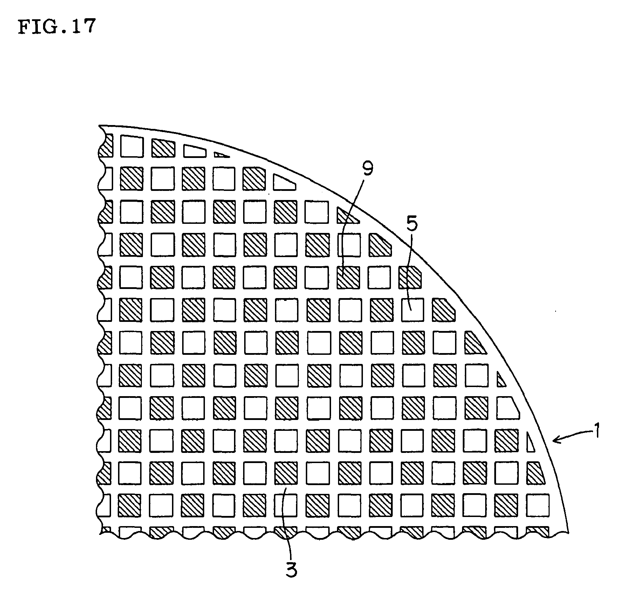

As shown in FIGS. 15 and 16, the third and fourth honeycomb structures according to the present invention have an inlet-side end face 20 that serves as a fluid inlet and an outlet-side end face 21 that serves as a fluid outlet. A plurality of cells (through-holes) 5 that serve as fluid passages are partitioned by a porous partition wall 3 between the inlet-side end face 20 and the outlet-side end face 21. When using the honeycomb structure as a filter such as DPF, plugging portions are generally disposed so that the openings of given cells are plugged on the inlet-side end face and the opening of the remaining cells are plugged on the outlet-side end face. As shown in FIG. 17, the cells are normally plugged so that one end face of the honeycomb segment is plugged by plugging portions 9 in a checkered pattern and the other end face of the honeycomb segment is plugged by plugging portions in a complementary checkered pattern. Specifically, the plugging portions are formed so that the openings of the adjacent cells are plugged on opposite end faces.

A fluid containing PM such as soot flows into the plugged honeycomb structure through one end face (inlet-side end face) via the cells that are not plugged on that end face, passes through the porous partition wall having a filtration capability, and flows into the cells that are not plugged on the other end face (outlet-side end face). PM contained in the fluid is collected by the partition wall when the fluid passes through the partition wall, and the purified fluid from which PM has been removed is discharged through the other end face.

The third and fourth honeycomb structures according to the present invention include a honeycomb-shaped porous base material, and a modification portion (densification portion) that is formed by impregnating a part of the base material with a slurry that contains particles smaller than the average pore size of the base material, and heating the base material.

When using the honeycomb structure according to the present invention as a DPF, the modification portion moderately suppresses an increase in temperature by increasing the heat capacity and the thermal conductivity in an area near the outlet-side end face in which the temperature tends to increase to a large extent during filter regeneration to improve the thermal impact resistance. In the third and fourth honeycomb structures according to the present invention, the formation area of the modification portion is limited in order to prevent a situation in which a pressure loss increases to a large extent due to the modification portion. Specifically, the formation area of the modification portion is within the range of one-tenth to half of the total length of the honeycomb structure from the outlet-side end face of the honeycomb structure along the axial direction of the cells. If the formation area of the modification portion is below one-tenth of the total length of the honeycomb structure, it is difficult to achieve a heat capacity and a thermal conductivity that effectively suppress an excessive increase in temperature in an area near the outlet-side end face during filter regeneration. If the formation area of the modification portion exceeds half of the total length of the honeycomb structure, a pressure loss increases to a large extent due to the modification portion so that the honeycomb structure cannot be utilized as a filter.

An increase in temperature in an area near the outlet-side end face during filter regeneration can be appropriately suppressed while suppressing an excessive increase in pressure loss by thus limiting the formation area of the modification portion while limiting the porosity and the average pore size of the base material and the porosity and the average pore size of the modification portion that significantly affect a pressure loss as described later. As a result, a honeycomb structure having a well-balanced filter performance can be obtained. In the fourth honeycomb structure according to the present invention, an increase in pressure loss due to the modification portion can be more easily suppressed by limiting the formation area of the modification portion in the diametrical direction of the honeycomb structure to an area excluding a range of one-tenth to three-fifths of the radius of the honeycomb structure from the periphery to the center of the honeycomb structure. If the non-formation area of the modification portion in the diametrical direction of the honeycomb structure is limited to an area of below one-tenth of the radius of the honeycomb structure from the periphery to the center of the honeycomb structure, an effect of suppressing an increase in pressure loss may not be obtained. If the non-formation area of the modification portion in the diametrical direction of the honeycomb structure is limited to an area of beyond three-fifths of the radius of the honeycomb structure from the periphery to the center of the honeycomb structure, an effect of suppressing an increase in temperature in an area near the outlet-side end face during filter regeneration may not be obtained.

The base material of the first to fourth honeycomb structures according to the present invention has a porosity of 30 to 80%, and preferably 45 to 80%. If the porosity of the base material is below 30%, the pressure loss of the base material increases to a large extent. If the porosity of the base material is beyond 80%, the maximum temperature during filter regeneration increases to a large extent. The average pore size of the base material is 5 to 40 µm, and preferably 5 to 20 µm. If the average pore size of the base material is below 5 µm, the pressure loss of the base material increases to a large extent. If the average pore size of the base material is beyond 40 µm, the PM collection filter function decreases to a large extent.

The porosity of the modification portion is lower than that of the base material by 2 to 20%, and preferably 3 to 12%. If the porosity of the modification portion is lower than that of the base material by below 2%, the effect obtained by forming the modification portion, that is an effect of suppressing an excessive increase in temperature in an area near the outlet-side end face during filter regeneration, may become insufficient. If the porosity of the modification portion is lower than that of the base material by 20% or more, the pressure loss increases to a large extent. The average pore size of the modification portion is smaller than that of the base material by 0.1 to 10 µm, and preferably 0.1 to 5 µm. If the average pore size of the modification portion is smaller than that of the base material by below 0.1 µm, the effect obtained by forming the modification portion may become insufficient. If the average pore size of the modification portion is smaller than that of the base material by 10 µm or more, the pressure loss increases to a large extent.

The term "porosity" used herein refers to a value obtained by cutting a tabular specimen having a thickness equal to that of the partition wall from an area of the base material in which the modification portion is formed or is not formed, and measuring the porosity of the specimen by the Archimedes method. The term "average pore size" used herein refers to a value obtained by cutting a specimen having a given shape (5×15 mm) from an area of the base material in which the modification portion is formed or is not formed, and measuring the average pore size of the specimen using a mercury porosimeter.

In the first honeycomb structure according to the present invention, all of the honeycomb segments that form the honeycomb structure may be identical with regard to the length, the porosity, and the average pore size of the modification portion. Alternatively, the peripheral segment positioned in the periphery of the honeycomb structure and the central segment positioned inside the peripheral segment may differ in at least one of the length, the porosity, and the average pore size of the modification portion insofar as the length, the porosity, and the average pore size of the modification portion are within the above ranges. In the third honeycomb structure according to the present invention, the entire honeycomb structure may be identical with regard to the length, the porosity, and the average pore size of the modification portion in the diametrical direction. Alternatively, at least one of the length, the porosity, and the average pore size of the modification portion may change successively or stepwise from the center to the periphery of the honeycomb structure insofar as the length, the porosity, and the average pore size of the modification portion are within the above ranges.

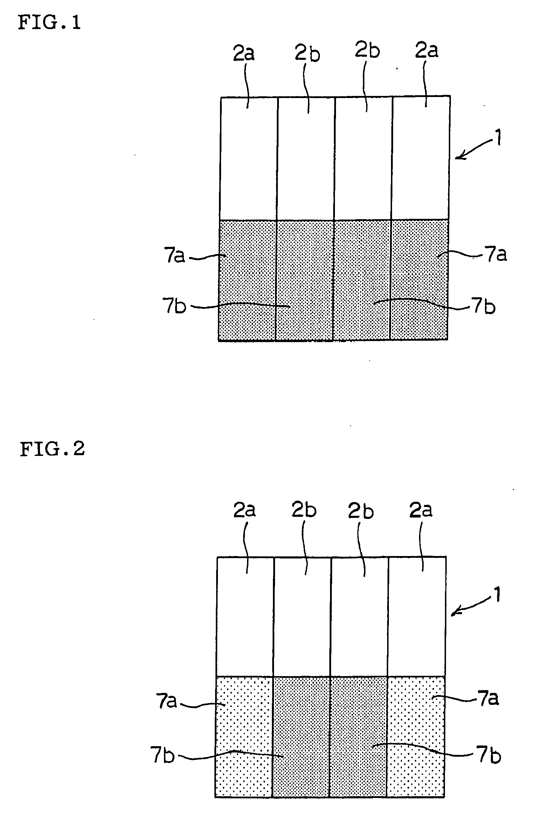

FIG. 1 is a schematic cross-sectional view showing one embodiment of the first honeycomb structure according to the present invention. In this embodiment, a modification portion 7a of a peripheral segment 2a positioned in the periphery of the honeycomb structure 1 and a modification portion 7b of a central segment 2b positioned inside the peripheral segment 2a have an identical length. The modification portions 7a and 7b have an identical porosity and an identical average pore size. According to this embodiment, the effects of the present invention can be sufficiently achieved.

FIG. 2 is a schematic cross-sectional view showing another embodiment of the first honeycomb structure according to the present invention. In this embodiment, the modification portion 7a of the peripheral segment 2a positioned in the periphery of the honeycomb structure 1 and the modification portion 7b of the central segment 2b positioned inside the peripheral segment 2a have an identical length. However, the modification portion 7b of the central segment 2b has a porosity and an average pore size lower (smaller) than those of the modification portion 7a of the peripheral segment 2a. An increase in temperature tends to occur in an area near the outlet-side end face during filter regeneration. In particular, the temperature of the center of the cross section in the diametrical direction increases to a large extent as compared with the periphery since heat is released to the outside to only a small extent. Therefore, it is preferable to densify the modification portion 7b of the central segment 2b to increase the heat capacity and the thermal conductivity so that thermal stress due to a non-uniform temperature distribution is reduced.

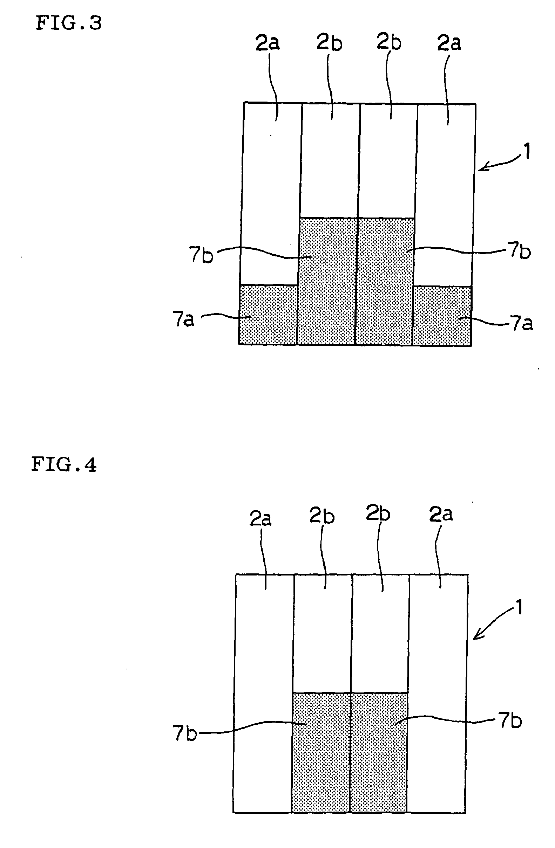

FIG. 3 is a schematic cross-sectional view showing a further embodiment of the first honeycomb structure according to the present invention. In this embodiment, the modification portion 7a of the peripheral segment 2a positioned in the periphery of the honeycomb structure 1 and the modification portion 7b of the central segment 2b positioned inside the peripheral segment 2a have an identical porosity and an identical average pore size. However, the length of the modification portion 7b of the central segment 2b is larger than that of the modification portion 7a of the peripheral segment 2a. The temperature of the center of the cross section in the diametrical direction increases to a large extent as compared with the periphery since heat is released to the outside to only a small extent, as described above. Therefore, it is preferable to increase the length of the modification portion 7b of the central segment 2b as compared with the modification portion 7a of the peripheral segment 2a to increase the heat capacity and the thermal conductivity so that thermal stress due to a non-uniform temperature distribution is reduced.

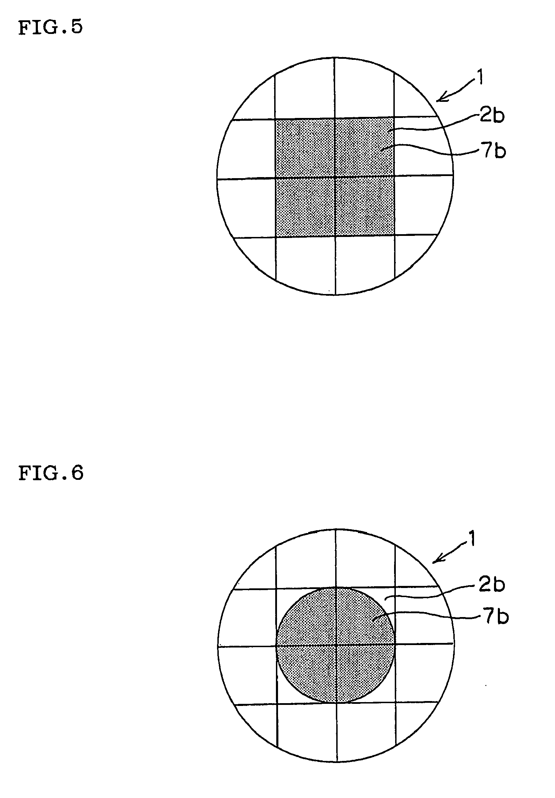

FIG. 4 is a schematic cross-sectional view showing one embodiment of the second honeycomb structure according to the present invention. In this embodiment, a modification portion is not formed in the peripheral segment 2a positioned in the periphery of the honeycomb structure 1, and only the modification portion 7b is formed in the central segment 2b positioned inside the peripheral segment 2a. The temperature of the center of the cross section in the diametrical direction increases to a large extent as compared with the periphery since heat is released to the outside to only a small extent, as described above. Therefore, it is also preferable to form only the modification portion 7b in the central segment 2b to increase the heat capacity and the thermal conductivity so that thermal stress due to a non-uniform temperature distribution is reduced. When forming the modification portion 7b only in the central segment 2b, the modification portion 7b may be formed over the entire area in the diametrical direction as shown in FIG. 5 that is a schematic plan view of the outlet-side end face, or may be partially formed in the diametrical direction as shown in FIG 6 that is a schematic plan view of the outlet-side end face.

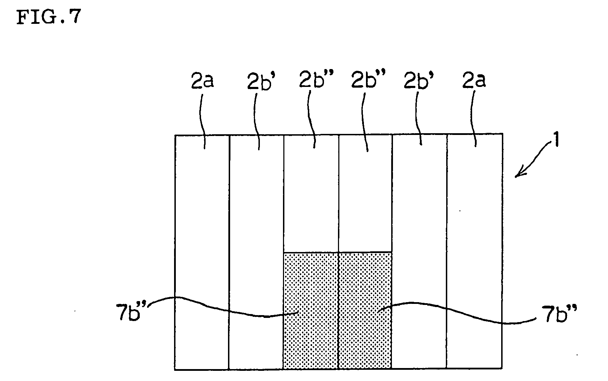

FIG. 7 is a schematic cross-sectional view showing another embodiment of the second honeycomb structure according to the present invention. In this embodiment, a modification portion is not formed in the peripheral segment 2a positioned in the periphery of the honeycomb structure 1 and a central segment 2b' that is positioned inside the peripheral segment 2a and is adjacent to the peripheral segment 2a, and a modification portion 7b" is formed only in a central segment 2b" positioned inside the central segment 2b'. Since heat is released from the central segment to only a small extent as compared with the peripheral segment so that an increase in temperature tends to occur, it is preferable to form the modification portion in the central segment. On the other hand, when the number of segments that form the honeycomb structure is large, heat is relatively easily released from the central segment positioned near the periphery of the honeycomb structure in the same manner as the peripheral segment. Therefore, the modification portion may not be formed in the central segment positioned near the periphery of the honeycomb structure and the peripheral segment, and the modification portion may be formed only in the remaining central segments to increase the heat capacity and the thermal conductivity. In this case, thermal stress due to a non-uniform temperature distribution can also be reduced.

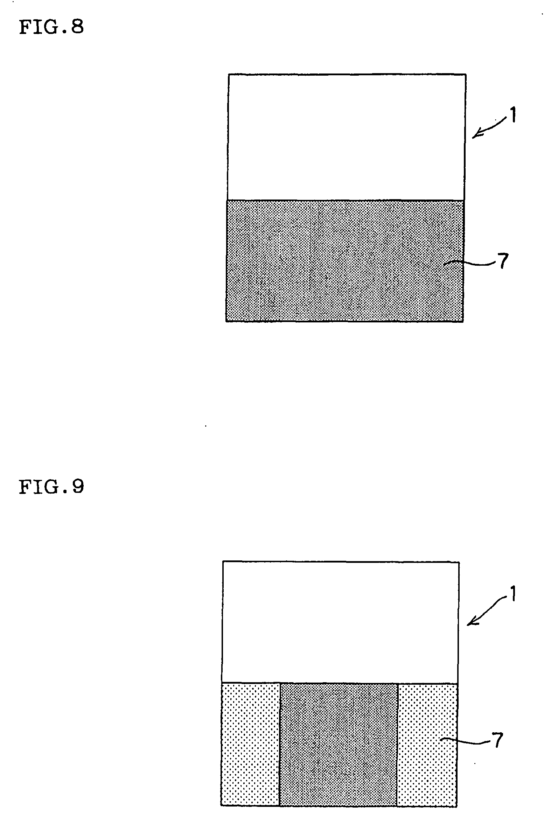

FIG. 8 is a schematic cross-sectional view showing one embodiment of the third honeycomb structure according to the present invention. In this embodiment, the modification portion 7 has an identical length over the honeycomb structure 1 in the diametrical direction. The modification portion 7 has an identical porosity and an identical average pore size over the entire modification portion 7. According to this embodiment, the effects of the present invention can be sufficiently achieved.

FIG. 9 is a schematic cross-sectional view showing another embodiment of the third honeycomb structure according to the present invention. In this embodiment, the modification portion 7 has an identical length over the entire honeycomb structure 1 in the diametrical direction. However, the porosity and the average pore size of the modification portion 7 are changed so that the porosity and the average pore size decrease from the periphery to the center. The temperature of the center of the cross section in the diametrical direction increases to a large extent as compared with the periphery since heat is released to the outside to only a small extent, as described above. Therefore, it is preferable to densify the center as compared with the periphery to increase the heat capacity and the thermal conductivity so that thermal stress due to a non-uniform temperature distribution is reduced.

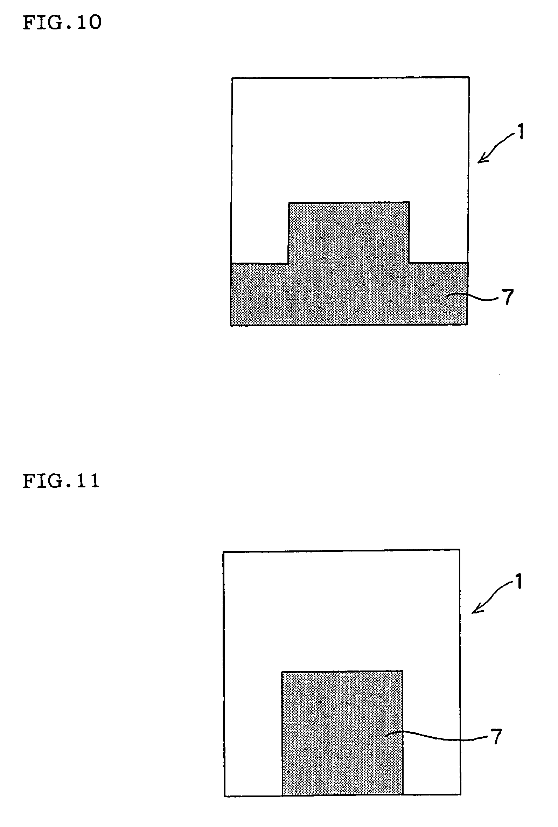

FIG. 10 is a schematic cross-sectional view showing a further embodiment of the third honeycomb structure according to the present invention. In this embodiment, the modification portion 7 has an identical porosity and an identical average pore size over the entire honeycomb structure 1 in the diametrical direction. However, the length of the modification portion is changed so that the length at the center is larger than the length in the periphery. The temperature of the center of the cross section in the diametrical direction increases to a large extent as compared with the periphery since heat is released to the outside to only a small extent, as described above. Therefore, it is preferable to increase the length of the modification portion 7 at the center to increase the heat capacity and the thermal conductivity so that thermal stress due to a non-uniform temperature distribution is reduced.

FIG. 11 is a schematic cross-sectional view showing one embodiment of the fourth honeycomb structure according to the present invention. In this embodiment, the formation area of the modification portion 7 in the diametrical direction of the honeycomb structure 1 is limited to a center area excluding a range of one-tenth to three-fifths of the radius of the honeycomb structure 1 from the periphery to the center of the honeycomb structure 1. The temperature of the center of the cross section in the diametrical direction increases to a large extent as compared with the periphery since heat is released to the outside to only a small extent, as described above. Therefore, it is also preferable to form the modification portion 7 only in the center area excluding the periphery in a given range to increase the heat capacity and the thermal conductivity so that thermal stress due to a non-uniform temperature distribution is reduced.

In the first and second honeycomb structures according to the present invention, the number of peripheral segments is not particularly limited insofar as the periphery of the honeycomb structure can be formed. The number of central segments is not particularly limited insofar as the central segment is positioned inside the peripheral segment.

As the material for the base material of the honeycomb structure or the honeycomb segment of the first to fourth honeycomb structures according to the present invention, at least one material selected from the group consisting of silicon carbide (SiC), a silicon-silicon carbide composite material formed using silicon carbide (SiC) as an aggregate and silicon (Si) as a binder, silicon nitride, cordierite, mullite, alumina, spinel, a silicon carbide-cordierite composite material, lithium aluminum silicate, aluminum titanate, and an Fe-Cr-Al metal is preferably used from the viewpoint of strength, heat resistance, and the like. As the material for the base material of the honeycomb segment used in the first and second honeycomb structures according to the present invention, it is preferable to use silicon carbide or a silicon-silicon carbide composite material. As the material for the base material used in the third and fourth honeycomb structures according to the present invention, it is preferable to use cordierite. It is preferable to use the same material as the material for the honeycomb structure or the honeycomb segment as the material for the plugging portion in order to reduce the difference in thermal expansion between the honeycomb structure or the honeycomb segment and the plugging portion.

The base material may be produced using a known method. For example, a binder such as methyl cellulose, hydroxypropoxyl cellulose, hydroxyethyl cellulose, carboxymethyl cellulose, or polyvinyl alcohol), a pore-forming material, a surfactant, a solvent such as water, and the like are added to the above-mentioned material to prepare a plastic clay. The resulting clay is extruded to obtain a product having a given honeycomb shape. The resulting product is dried by applying microwaves, a hot blast, or the like, and then fired. When forming the plugging portions in the cells, the product may be fired before forming the plugging portions in the cells. Alternatively, the plugging portions may be formed in the cells, and the product may be fired together with the plugging portions.

The cells may be plugged using a known method. For example, a sheet is attached to the end face of the honeycomb segment or the honeycomb structure. Holes are formed in the sheet at positions corresponding to the plugging target cells. The end face of the honeycomb segment or the honeycomb structure to which the sheet is attached is immersed in a plugging slurry prepared using the material for the plugging portion so that the open end of the plugging target cells is filled with the plugging slurry through the holes formed in the sheet. The plugging slurry is then cured by drying and/or firing.

The porosity and the average pore size of the base material may be adjusted by changing the particle diameter of the material, the particle diameter and the amount of the pore-forming material, the firing conditions, and the like.

In a honeycomb structure used as a DPF, all of the cells generally have an identical shape which is normally a quadrangle shape and an identical open area. The cells are alternately plugged in a checkered pattern on the inlet-side end face and the outlet-side end face, and the inlet-side end face and the outlet-side end face have an identical aperture ratio. In recent years, a honeycomb structure in which the aperture ratio of the inlet-side end face is larger than that of the outlet-side end face has been proposed in order to suppress an increase in pressure loss after soot has been collected, for example. Such a structure may also be applied to the honeycomb structure according to the present invention.

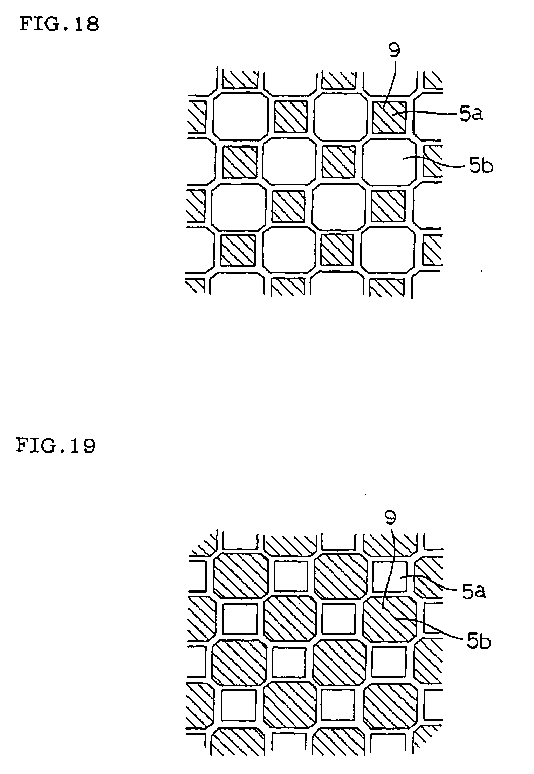

FIGS. 18 and 19 show one embodiment of the plugged honeycomb structure in which the inlet-side end face and the outlet-side end face differ in the aperture ratio.
FIG 18 is a partial enlarged view of the inlet-side end face, and FIG 19 is a partial enlarged view of the outlet-side end face. In this embodiment, as shown in FIGS. 18 and 19, quadrangular cells 5a and octagonal cells 5b having an open area larger than that of the quadrangular cells 5a are alternately arranged on each end face in directions perpendicular to each other. The quadrangular cells 5a are plugged by the plugging portions 9 on the inlet-side end face, and the octagonal cells 5b are plugged by the plugging portions 9 on the outlet-side end face. Since the octagonal cells 5b having a large open area are open in the inlet-side end face and the quadrangular cells 5a having a small open area are open in the outlet-side end face, the aperture ratio of the inlet-side end face can be increased as compared with that of the outlet-side end face.

The modification portion may be formed by preparing a modification slurry containing particles smaller than the average pore size of the base material, immersing the base material in the slurry from one end face of the base material to a given depth that corresponds to the length of the modification portion so that the base material is impregnated with the slurry that is the pores in the partition wall of the base material are filled with the particles contained in the slurry, and then heating the base material, for example. In the first and second honeycomb structures according to the present invention, the modification portion may be formed before bonding the segments, or may be formed after bonding the segments into the honeycomb structure. When forming the modification portion before bonding the segments, the formation area, the porosity, and the average pore size of the modification portion can be arbitrarily caused to differ between the central segment and the peripheral segment. When forming the modification portion after bonding the segments into the honeycomb structure, the formation area, the porosity, and the average pore size of the modification portion can be set corresponding to each segment by changing a mask or modifying each segment a plurality of times. Therefore, formation of the modification portion is not limited by the state of the honeycomb structure.

The modification slurry is a component that remains in the partition wall. A modification slurry that changes chemically or physically may also be used insofar as the modification slurry is not removed from the partition wall. It is preferable that the modification slurry contain a ceramic selected from the group consisting of silicon carbide, silicon nitride, cordierite, alumina, mullite, zirconia, zirconium phosphate, aluminum titanate, titania, and combinations thereof, an Fe-Cr-Al-based metal, an Ni-based metal, or an inorganic powder such as Si metal and SiC as particles that achieve densification. Note that particles such as γ-alumina, ceria, zirconia, ceria complex oxide, or zirconia complex oxide contained in a washcoating material used when causing the honeycomb structure to support a catalyst component may also be used.

It is preferable that the particles have a particle diameter corresponding to 2 to 60% of the average pore size of the base material. If the particles have a particle diameter corresponding to below 2% of the average pore size of the base material, since the particle diameter of the particles with which the pores in the partition wall are filled is too small with respect to the pore size, the pores may not be sufficiently filled with the particles. Specifically, the particles may pass through the pores without being held in the pores. If the particles have a particle diameter corresponding to 60% or more of the average pore size of the base material, since the particle diameter of the particles with which the pores in the partition wall are filled is too large with respect to the pore size, the pores may not be filled with the particles, that is the particles may not enter the pores.

It is preferable that the modification slurry also contain a binder that allows the particles to be bonded to the inner surface of the pores. The modification slurry is preferably prepared by diluting the mixture with water. The modification slurry may further contain a dispersant and an anti-foaming agent. As the binder, a colloidal sol such as silica sol or alumina sol, a layer compound that swells to exhibit binding capability, or the like may be suitably used. The heating conditions after impregnation with the modification slurry may be appropriately determined based on the composition of the modification slurry. When using the modification slurry having the same composition as that of the base material, the base material must be heated under the same conditions as the firing conditions for the base material in order to provide binding capability. The base material can be heated at a low temperature by utilizing a material such as colloidal silica that exhibits strength at 700 to 800°C.

The difference in porosity between the modification portion and the base material and the difference in average pore size between the modification portion and the base material may be adjusted by changing the particle diameter and the content of the particles contained in the modification slurry, the number of times that the base material is impregnated with the modification slurry, and the like.

In the first to fourth honeycomb structures according to the present invention, the thickness of the partition wall of the honeycomb structure or the honeycomb segment is preferably 7 to 20 mil (178 to 508 µm), more preferably 8 to 16 mil (203 to 406 µm), and still more preferably 10 to 12 mil (254 to 305 µm). If the thickness of the partition wall is below 7 mil, the thermal impact resistance may decrease due to a decrease in strength. If the thickness of the partition wall exceeds 20 mil, the pressure loss may increase.

The cell density is preferably 140 to 350 cells/in² (cpsi), more preferably 160 to 320 cpsi, and still more preferably 200 to 300 cpsi. If the cell density is below 140 cpsi, the fluid contact efficiency may decrease. If the cell density exceeds 350 cpsi, the pressure loss may increase. The unit "cpsi" is an abbreviation for "cells per square inch" which means the number of cells per square inch. For example, 10 cpsi corresponds to about 1.55 cells/cm².

The cell shape (cell cross-sectional shape) is not particularly limited. The cell shape may be a polygon such as quadrangle, triangle, hexagon, or octagon, or a circle, for example. Cells having different shapes may be arranged in combination.

In the first to fourth honeycomb structures according to the present invention, a catalyst component may be supported on the partition wall in order to promote combustion of PM during filter regeneration or purify a toxic substance contained in exhaust gas. A catalyst component may be supported on the partition wall by impregnating a powder of a heat-resistant inorganic oxide having a large specific surface area such as an alumina powder with a solution containing a catalyst component, drying and firing the resulting product to obtain a powder containing the catalyst component, adding an alumina sol, water, and the like to the powder to prepare a catalyst slurry, coating the honeycomb segment or the honeycomb structure with the slurry by immersing them in the slurry, and drying and firing the resulting product, for example.

It is preferable to use at least one noble metal selected from the group consisting of Pt, Rh, and Pd as the catalyst component. The amount of noble metal supported on the honeycomb structure is 0.3 to 3.5 g/l per unit volume of the honeycomb structure.

### EXAMPLES

The present invention is further described below by way of examples. Note that the present invention is not limited to the following examples.

### (Examples 1 to 49 and Comparative Examples 1 to 21)

An SiC powder and an Si metal powder were mixed in a mass ratio of 80:20. A pore-forming material, an organic binder, a surfactant, and water were added to the mixture to obtain a plastic clay. The clay was extruded and dried to obtain a honeycomb-shaped formed product. The end of each cell of the honeycomb-shaped formed product was plugged so that each end of the honeycomb-shaped formed product was plugged in a checkered pattern. Specifically, plugging portions were formed so that the adjacent cells were plugged on opposite ends. The same material as the material for the honeycomb-shaped formed product was used as the material for the plugging portion. After drying the plugging portions, the honeycomb-shaped formed product was degreased at about 400°C in the air, and fired at about 1450°C in an argon (Ar) atmosphere so that the SiC particles contained in the formed product were bonded through Si to obtain a honeycomb segment base material in the shape of a quadrangular prism having a porosity and an average pore size shown in Tables 1 to 10 wherein thickness of partition wall is 12 mil (305 µm), cell shape is square, cell density is about 46.5 cells/cm² (300 cells/in²), cross-sectional shape is square (35×35 mm), length in an axial direction is 152 mm. The porosity and the average pore size were measured as described above.

Colloidal silica which is a solution having a solid content of 40% in an amount of 150 parts by mass and 200 parts by mass of water were added to 150 parts by mass of SiC particles having a particle diameter of 2 µm. The mixture was stirred sufficiently to prepare a modification slurry. A dispersant and an anti-foaming agent were appropriately added when preparing the modification slurry. The base material was immersed in the resulting modification slurry to a given depth from one end face. Unnecessary slurry was removed by blowing air. After drying the slurry, the base material was heated at 700°C to form a modification portion having a length shown in Tables 1 to 10 as modification portion length ratio with respect to the total length of the base material. The porosity of the modification portion was lower than that of the base material by a value shown in Tables 1 to 10 as porosity reduction rate, and the average pore size of the modification portion was smaller than the average pore size of the base material by a value shown in Tables 1 to 10 as average pore size reduction amount. A honeycomb segment was thus produced.

An SiC powder, aluminosilicate fibers, a silica sol aqueous solution, and clay were mixed. After the addition of water, the mixture was kneaded for 30 minutes using a mixer to prepare a bonding material in the form of a paste. The bonding material was applied to the outer circumferential surface of the honeycomb segment to a thickness of about 1 mm to form a bonding material layer, and another honeycomb segment was placed on the bonding material layer. This step was repeated to produce a honeycomb segment laminate formed of sixteen (4×4) honeycomb segments. After bonding the honeycomb segments by appropriately applying a pressure from the outside, the resulting product was dried at 120°C for two hours to obtain a honeycomb segment bonded product. The periphery of the honeycomb segment bonded product was ground so that the honeycomb segment bonded product had a columnar external shape. A coating material having the same composition as that of the bonding material was applied to the ground surface of the honeycomb segment bonded product to form an outer circumferential wall. The coating material was dried and cured at 700°C for two hours to obtain each of the honeycomb structures of Examples 1 to 49 and Comparative Examples 1 to 21.

The pressure loss increasing rate of each of the honeycomb structures of Examples 1 to 49 and Comparative Examples 1 to 21 was calculated by the following method. Exhaust gas of 200°C containing soot was flowed through each of the honeycomb structures of Examples 1 to 49 and Comparative Examples 1 to 21 in which the modification portion has been formed (modified honeycomb structures) at a flow rate of 2.27 Nm³/min so that the soot was gradually deposited on the honeycomb structure. The modified honeycomb structure pressure loss after soot deposition was obtained by measuring the pressure loss of the honeycomb structure when the amount of soot deposited reached 4 g/l. A honeycomb structure in which the modification portion has not been formed (unmodified honeycomb structure) was produced in the same manner as in each example and comparative example, except that the modification portion was not formed in the base material. The unmodified honeycomb structure pressure loss after soot deposition was obtained by measuring the pressure loss of each unmodified honeycomb structure in the same manner as described above. The pressure loss increasing rate was calculated from the pressure loss thus measured using the following expression. The results are shown in Tables 1 to 7.

Pressure loss increasing rate (%) = (modified honeycomb structure pressure loss after soot deposition/unmodified honeycomb structure pressure loss after soot deposition-1)×100

**TABLE 1**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 1 | 42 | 14 | 3.2 | 2.1 | 1/4 | 1.8 |
| Example 2 | 42 | 14 | 3.1 | 2.6 | 1/2 | 7.7 |
| Example 3 | 42 | 14 | 6.7 | 1.9 | 1/8 | 1.7 |
| Example 4 | 42 | 14 | 7.1 | 2.3 | 1/4 | 4.3 |
| Example 5 | 42 | 14 | 7.0 | 2.0 | 1/2 | 16.9 |
| Comparative Example 1 | 42 | 14 | 6.9 | 2.1 | 1/1.5 | 50.7 |
| Example 6 | 42 | 14 | 12.2 | 2.0 | 1/4 | 11.0 |
| Example 7 | 42 | 14 | 12.5 | 2.4 | 1/2 | 39.4 |
| Comparative Example 2 | 42 | 14 | 22.3 | 1.9 | 1/4 | 44.0 |
| Comparative Example 3 | 42 | 14 | 23.0 | 2.2 | 1/2 | 154.1 |

**TABLE 2**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 8 | 42 | 18 | 2.9 | 2.4 | 1/4 | 2.7 |
| Example 9 | 42 | 18 | 3.3 | 2.6 | 1/2 | 8.5 |
| Example 10 | 42 | 18 | 6.9 | 2.2 | 1/8 | 1.8 |
| Example 11 | 42 | 18 | 6.7 | 2.3 | 1/4 | 4.7 |
| Example 12 | 42 | 18 | 6.8 | 2.5 | 1/2 | 18.9 |
| Comparative Example 4 | 42 | 18 | 7.0 | 2.1 | 1/1.5 | 52.6 |
| Example 13 | 42 | 18 | 12.0 | 2.3 | 1/4 | 12.5 |
| Example 14 | 42 | 18 | 11.7 | 2.4 | 1/2 | 38.2 |
| Comparative Example 5 | 42 | 18 | 23.5 | 2.4 | 1/4 | 49.7 |
| Comparative Example 6 | 42 | 18 | 24.2 | 2.6 | 1/2 | 170.8 |

**TABLE 3**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 15 | 49 | 13 | 2.5 | 2.1 | 1/4 | 1.7 |
| Example 16 | 49 | 13 | 2.8 | 1.8 | 1/2 | 6.6 |
| Example 17 | 49 | 13 | 6.8 | 1.9 | 1/8 | 1.3 |
| Example 18 | 49 | 13 | 7.2 | 2.3 | 1/4 | 3.1 |
| Example 19 | 49 | 13 | 7.3 | 2.0 | 1/2 | 15.3 |
| Comparative Example 7 | 49 | 13 | 7.1 | 2.2 | 1/1.5 | 44.9 |
| Example 20 | 49 | 13 | 11.5 | 1.9 | 1/4 | 7.9 |
| Example 21 | 49 | 13 | 13.0 | 2.1 | 1/2 | 38.7 |
| Comparative Example 8 | 49 | 13 | 23.8 | 2.1 | 1/4 | 42.9 |
| Comparative Example 9 | 49 | 13 | 24.3 | 2.1 | 1/2 | 152.0 |

**TABLE 4**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 22 | 51 | 23 | 2.9 | 2.2 | 1/4 | 1.5 |
| Example 23 | 51 | 23 | 3.2 | 2.4 | 1/2 | 7.3 |
| Example 24 | 51 | 23 | 6.9 | 2.1 | 1/8 | 1.4 |
| Example 25 | 51 | 23 | 7.3 | 2.3 | 1/4 | 3.7 |
| Example26 | 51 | 23 | 7.0 | 2.2 | 1/2 | 17.4 |
| Comparative Example 10 | 51 | 23 | 7.1 | 2.3 | 1/1.5 | 46.2 |
| Example 27 | 51 | 23 | 13.2 | 2.6 | 1/4 | 11.6 |
| Example 28 | 51 | 23 | 12.8 | 2.5 | 1/2 | 37.4 |
| Comparative Example 11 | 51 | 23 | 24.6 | 2.4 | 1/4 | 47.3 |
| Comparative Example 12 | 51 | 23 | 24.8 | 2.5 | 1/2 | 163.0 |

**TABLE 5**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 29 | 58 | 14 | 3.0 | 1.7 | 1/4 | 0.9 |
| Example 30 | 58 | 14 | 2.8 | 1.5 | 1/2 | 5.7 |
| Example 31 | 58 | 14 | 7.3 | 1.9 | 1/8 | 0.8 |
| Example 32 | 58 | 14 | 7.1 | 2.0 | 1/4 | 1.9 |
| Example 33 | 58 | 14 | 7.5 | 1.6 | 1/2 | 13.6 |
| Comparative Example 13 | 58 | 14 | 7.2 | 1.7 | 1/1.5 | 39.6 |
| Example 34 | 58 | 14 | 12.8 | 1.7 | 1/4 | 8.0 |
| Example 35 | 58 | 14 | 12.7 | 1.8 | 1/2 | 32.1 |
| Comparative Example 14 | 58 | 14 | 24.3 | 2.4 | 1/4 | 39.0 |
| Comparative Example 15 | 58 | 14 | 24.5 | 2.2 | 1/2 | 137.8 |

**TABLE 6**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 36 | 58 | 18 | 2.9 | 2.0 | 1/4 | 0.8 |
| Example 37 | 58 | 18 | 2.9 | 1.8 | 1/2 | 6.0 |
| Example 38 | 58 | 18 | 7.3 | 2.3 | 1/8 | 0.7 |
| Example 39 | 58 | 18 | 6.9 | 2.3 | 1/4 | 2.0 |
| Example 40 | 58 | 18 | 6.8 | 2.1 | 1/2 | 13.9 |
| Comparative Example 16 | 58 | 18 | 7.0 | 2.2 | 1/1.5 | 40.0 |
| Example 41 | 58 | 18 | 13.0 | 2.0 | 1/4 | 8.4 |
| Example 42 | 58 | 18 | 13.3 | 1.8 | 1/2 | 33.7 |
| Comparative Example 17 | 58 | 18 | 24.5 | 2.2 | 1/4 | 37.2 |
| Comparative Example 18 | 58 | 18 | 23.8 | 2.3 | 1/2 | 138.9 |

**TABLE 7**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 43 | 58 | 24 | 3.2 | 2.4 | 1/4 | 1.1 |
| Example 44 | 58 | 24 | 2.7 | 2.4 | 1/2 | 5.4 |
| Example 45 | 58 | 24 | 7.1 | 2.5 | 1/8 | 0.8 |
| Example 46 | 58 | 24 | 6.8 | 2.2 | 1/4 | 2.2 |
| Example 47 | 58 | 24 | 7.2 | 2.3 | 1/2 | 14.2 |
| Comparative Example 19 | 58 | 24 | 7.0 | 2.1 | 1/1.5 | 40.9 |
| Example 48 | 58 | 24 | 11.4 | 2.1 | 1/4 | 6.1 |
| Example 49 | 58 | 24 | 12.5 | 2.3 | 1/2 | 33.5 |
| Comparative Example 20 | 58 | 24 | 23.7 | 2.6 | 1/4 | 37.0 |
| Comparative Example 21 | 58 | 24 | 24.1 | 2.2 | 1/2 | 140.9 |

As shown in Tables 1 to 7, Examples 1 to 49 satisfying the requirements according to the present invention showed a lower pressure loss increasing rate as compared with Comparative Examples 1, 4, 7, 10, 13, 16, and 19 in which the length of the modification was beyond half of the total length of the honeycomb segment and Comparative Examples 2, 3, 5, 6, 8, 9, 11, 12, 14, 15, 17, 18, 20, and 21 in which the porosity of the modification portion was lower than that of the base material by 20% or more. According to Examples 1 to 49, even if the dense modification portion was formed to suppress an increase in temperature in an area near the outlet-side end face during filter regeneration, an excessive increase in pressure loss rarely occurred.

### (Examples 50 to 67 and Comparative Examples 22 to 33)

Honeycomb structures were produced in the same manner as in Examples 1 to 49 and Comparative Examples 1 to 21, except that twelve peripheral segments located in the periphery and four central segments located inside the peripheral segments differed in at least one of the modification portion length ratio, the porosity reduction rate, and the average pore size reduction amount of the modification portion as shown in Tables 8 to 10. The pressure loss increasing rate of each honeycomb structure was calculated. The results are shown in Tables 8 to 10.

**TABLE 8**

| | Base material | | Central segment | | | Peripheral segment | | | Pressure loss increasing rate (%) |
|---|---|---|---|---|---|---|---|---|---|
| | Porosity (%) | Average pore size (µm) | Porosity reduction rate (%) | Average pore size reduction amount (µm) | modification portion length ratio | Porosity reduction rate (%) | Average pore size reduction amount (µm) | modification portion length ratio | |
| Comparative Example 22 | 42 | 14 | 6.6 | 2.2 | 1/1.5 | 6.8 | 2.0 | 1/4 | 47.2 |
| Example 50 | 42 | 14 | 6.9 | 2.4 | 1/2 | 6.7 | 2.3 | 1/4 | 15.8 |
| Example 51 | 42 | 14 | 7.1 | 1.9 | 1/2 | 7.1 | 1.8 | 0 | 14.9 |
| Example 52 | 42 | 14 | 6.8 | 1.6 | 1/4 | 7.0 | 1.9 | 1/2 | 14.1 |
| Comparative Example 23 | 42 | 14 | 6.8 | 2.1 | 1/4 | 6.9 | 1.7 | 1/1.5 | 42.2 |
| Example 53 | 42 | 14 | 6.9 | 2.1 | 1/2 | 3.0 | 2.1 | 1/2 | 13.8 |
| Example 54 | 42 | 14 | 12.3 | 2.3 | 1/2 | 2.8 | 2.3 | 1/2 | 29.3 |
| Comparative Example 24 | 42 | 14 | 22.5 | 1.8 | 1/2 | 2.8 | 2.4 | 1/2 | 108.0 |
| Example 55 | 42 | 14 | 12.0 | 1.9 | 1/2 | 6.8 | 2.0 | 1/2 | 32.0 |
| Comparative Example 25 | 42 | 14 | 22.8 | 2.0 | 1/2 | 7.2 | 2.1 | 1/2 | 110.6 |

**TABLE 9**

| | Base material | | Central segment | | | Peripheral segment | | | Pressure loss increasing rate (%) |
|---|---|---|---|---|---|---|---|---|---|
| | Porosity (%) | Average pore size (µm) | Porosity reduction rate (%) | Average pore size reduction amount (µm) | modification portion length ratio | Porosity reduction rate (%) | Average pore size reduction amount (µm) | modification portion length ratio | |
| Comparative Example 26 | 51 | 23 | 6.9 | 2.1 | 1/1.5 | 6.9 | 2.3 | 1/4 | 43.0 |
| Example 56 | 51 | 23 | 7.1 | 2.3 | 1/2 | 7.2 | 1.9 | 1/4 | 16.2 |
| Example 57 | 51 | 23 | 7.0 | 1.8 | 1/2 | 7.3 | 2.4 | 0 | 15.4 |
| Example 58 | 51 | 23 | 6.8 | 2.4 | 1/4 | 7.0 | 2.1 | 1/2 | 14.5 |
| Comparative Example 27 | 51 | 23 | 6.9 | 2.3 | 1/4 | 7.2 | 2.0 | 1/1.5 | 38.5 |
| Example 59 | 51 | 23 | 7.2 | 2.1 | 1/2 | 31 | 1.9 | 1/2 | 14.1 |
| Example 60 | 51 | 23 | 13.0 | 2.4 | 1/2 | 2.8 | 2.2 | 1/2 | 27.8 |
| Comparative Example 28 | 51 | 23 | 24.7 | 2.1 | 1/2 | 3.3 | 2.1 | 1/2 | 114.0 |
| Example 61 | 51 | 23 | 12.9 | 1.8 | 1/2 | 7.0 | 2.2 | 1/2 | 30.8 |
| Comparative Example 29 | 51 | 23 | 25.0 | 2.1 | 1/2 | 7.3 | 2.3 | 1/2 | 116.9 |

**TABLE 10**

| | Base material | | Central segment | | | Peripheral segment | | | Pressure loss increasing rate (%) |
|---|---|---|---|---|---|---|---|---|---|
| | Porosity (%) | Average pore size (µm) | Porosity reduction rate (%) | Average pore size reduction amount (µm) | modification portion length ratio | Porosity reduction rate (%) | Average pore size reduction amount (µm) | modification portion length ratio | |
| Comparative Example 30 | 58 | 14 | 6.8 | 1.6 | 1/1.5 | 7.3 | 1.8 | 1/4 | 36.8 |
| Example 62 | 58 | 14 | 7.2 | 1.9 | 1/2 | 7.1 | 1.9 | 1/4 | 12.6 |
| Example 63 | 58 | 14 | 7.1 | 2.0 | 1/2 | 7.4 | 1.6 | 0 | 12.0 |
| Example 64 | 58 | 14 | 6.9 | 2.4 | 1/4 | 6.9 | 2.0 | 1/2 | 11.4 |
| Comparative Example 31 | 58 | 14 | 7.3 | 1.8 | 1/4 | 7.3 | 2.1 | 1/1.5 | 33.0 |
| Example 65 | 58 | 14 | 7.1 | 2.1 | 1/2 | 3.2 | 1.9 | 1/2 | 11.0 |
| Example 66 | 58 | 14 | 13.1 | 1.9 | 1/2 | 3.4 | 1.7 | 1/2 | 23.7 |
| Comparative Example 32 | 58 | 14 | 24.5 | 2.4 | 1/2 | 3.1 | 1.8 | 1/2 | 96.2 |
| Example67 | 58 | 14 | 12.5 | 1.6 | 1/2 | 7.2 | 2.0 | 1/2 | 26.1 |
| Comparative Example 33 | 58 | 14 | 24.8 | 2.2 | 1/2 | 7.3 | 1.9 | 1/2 | 98.5 |

As shown in Tables 8 to 10, Examples 50 to 67 satisfying the requirements according to the present invention showed a lower pressure loss increasing rate as compared with Comparative Examples 22, 26, and 30 in which the length of the modification portion of the central segment was beyond half of the total length of the honeycomb segment, Comparative Examples 23, 27, and 31 in which the length of the modification portion of the peripheral segment was beyond half of the total length of the honeycomb segment, and Comparative Examples 24, 25, 28, 29, 32, and 33 in which the porosity of the modification portion of the central segment was lower than that of the base material by 20% or more. According to Examples 50 to 67, even if the dense modification portion was formed to suppress an increase in temperature in an area near the outlet-side end face during filter regeneration, an excessive increase in pressure loss rarely occurred.

### (Examples 68 to 88 and Comparative Examples 34 to 42)

Talc, kaolin, alumina, aluminum hydroxide, and silica as cordierite-forming raw materials were mixed in such a mass ratio that SiO₂ is 42 to 56 mass%, Al₂O₃ is 30 to 45 mass%, and MgO is 12 to 16 mass%. A pore former, an organic binder, a surfactant, and water were added to the mixture to obtain a plastic clay. The clay was extruded and dried to obtain a honeycomb-shaped formed product. An end of each cell of the honeycomb-shaped formed product was plugged so that each end face of the honeycomb-shaped formed product has a checkered pattern appearance. Specifically, plugging portions were formed so that the adjacent cells were plugged on opposite ends. The same material as the material for the honeycomb-shaped formed product was used as the material for the plugging portions. After forming and drying the plugging portions, the honeycomb-shaped formed product was fired to the maximum temperature range of 1400 to 1430°C in the air atmosphere to obtain a columnar honeycomb structure base material having a porosity and an average pore size shown in Tables 11 to 13, partition wall thickness of 12 mil (305 µm), square cell shape, cell density of about 46.5 cells/cm² (300 cells/in²), circular cross-section of 144 mm in diameter, length in axial direction of 152 mm. The porosity and the average pore size were measured as described above.

Colloidal silica which is a solution having a solid content of 40% in an amount of 150 parts by mass and 200 parts by mass of water were added to 150 parts by mass of cordierite particles having a particle diameter of 2 µm. The mixture was stirred sufficiently to prepare a modification slurry. A dispersant and an anti-foaming agent were appropriately added when preparing the modification slurry. The base material was immersed in the resulting modification slurry to a given depth from one end face. Then, unnecessary slurry was removed from the base material by blowing air. After drying the slurry, the base material was heated at 700°C to form a modification portion having a length shown in Tables 11 to 13 as modification portion length ratio with respect to the total length of the base material. The porosity of the modification portion was lower than that of the base material by a value shown as porosity reduction rate in Tables 1 to 10, and the average pore size of the modification portion was smaller than that of the base material by a value shown as average pore size reduction amount in Tables 1 to 10. Honeycomb structures of Examples 68 to 88 and Comparative Examples 34 to 42 were thus produced. The pressure loss increasing rate of each of the honeycomb structures was calculated in the same manner as in Examples 1 to 49 and Comparative Examples 1 to 21. The results are shown in Tables 11 to 13.

**TABLE 11**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 68 | 48 | 14 | 2.1 | 1.9 | 1/4 | 1.8 |
| Example 69 | 48 | 14 | 2.3 | 2.0 | 1/2 | 8.2 |
| Example 70 | 48 | 14 | 6.7 | 1.7 | 1/8 | 1.4 |
| Example 71 | 48 | 14 | 7.0 | 2.1 | 1/4 | 4.0 |
| Example 72 | 48 | 14 | 6.9 | 2.4 | 1/2 | 18.5 |
| Comparative Example 34 | 48 | 14 | 7.1 | 2.3 | 1/1.5 | 47.2 |
| Example 73 | 48 | 14 | 11.8 | 1.6 | 1/4 | 9.6 |
| Example 74 | 48 | 14 | 12.6 | 2.2 | 1/2 | 40.0 |
| Comparative Example 35 | 48 | 14 | 24.0 | 1.9 | 1/4 | 49.0 |
| Comparative Example 36 | 48 | 14 | 24.1 | 1.8 | 1/2 | 159.6 |

**TABLE 12**

| | Porosity (%) | Average pore size (µm) | Porosity reduction rate | (%) Average pore size reduction amount (µm) | modification portion length ratio | Pressure loss increasing rate (%) |
|---|---|---|---|---|---|---|
| Example 75 | 52 | 15 | 2.5 | 2.1 | 1/4 | 1.6 |
| Example 76 | 52 | 15 | 2.8 | 1.9 | 1/2 | 7.7 |
| Example 77 | 52 | 15 | 7.0 | 2.6 | 1/8 | 1.5 |
| Example 78 | 52 | 15 | 7.2 | 2.4 | 1/4 | 3.9 |
| Example 79 | 52 | 15 | 6.9 | 2.0 | 1/2 | 17.9 |
| Comparative Example 37 | 52 | 15 | 7.4 | 2.1 | 1/1.5 | 48.5 |
| Example 80 | 52 | 15 | 12.8 | 1.8 | 1/4 | 10.1 |
| Example 81 | 52 | 15 | 13.1 | 2.0 | 1/2 | 39.3 |
| Comparative Example 38 | 52 | 15 | 24.4 | 1.9 | 1/4 | 44.2 |
| Comparative Example 39 | 52 | 15 | 24.9 | 1.9 | 1/2 | 158.4 |

**TABLE 13**

| | Porosity (%) | Average pore size (µm) | Porosity reduction rate (%) | Average pore size reduction amount (µm) | modification portion length ratio | Pressure loss increasing rate (%) |
|---|---|---|---|---|---|---|
| Example 82 | 59 | 18 | 2.8 | 2.0 | 1/4 | 0.8 |
| Example 83 | 59 | 18 | 3.1 | 1.8 | 1/2 | 5.9 |
| Example 84 | 59 | 18 | 7.2 | 2.3 | 1/8 | 0.8 |
| Example 85 | 59 | 18 | 7.0 | 2.3 | 1/4 | 2.4 |
| Example 86 | 59 | 18 | 7.1 | 2.1 | 1/2 | 14.2 |
| Comparative Example 40 | 59 | 18 | 6.9 | 2.2 | 1/1.5 | 42.2 |
| Example 87 | 59 | 18 | 13.4 | 2.0 | 1/4 | 9.0 |
| Example 88 | 59 | 18 | 13.6 | 1.8 | 1/2 | 35.4 |
| Comparative Example 41 | 59 | 18 | 25.2 | 2.2 | 1/4 | 40.5 |
| Comparative Example 42 | 59 | 18 | 25.1 | 2.3 | 1/2 | 146.0 |

As shown in Tables 11 to 13, Examples 68 to 88 satisfying the requirements according to the present invention showed a lower pressure loss increasing rate as compared with Comparative Examples 34, 37, and 40 in which the length of the modification portion was beyond half of the total length of the honeycomb structure and Comparative Examples 35, 36, 38, 39, 41, and 42 in which the porosity of the modification portion was lower than the porosity of the base material by 20% or more. According to Examples 68 to 88, even if the dense modification portion was formed to suppress an increase in temperature in an area near the outlet-side end face during filter regeneration, an excessive increase in pressure loss rarely occurred.

The present invention can be suitably used for a dust collection filter such as DPF.

## Claims

1. A honeycomb structure formed by combining and integrally bonding a plurality of segments having a honeycomb-shape, in which a plurality of cells that serve as fluid passages are partitioned by porous partition walls between an inlet-side end face that serves as a fluid inlet and an outlet-side end face that serves as a fluid outlet, in a direction perpendicular to an axial direction of the cells, each of the plurality of segments comprising a base material which is porous and honeycomb-shaped and a modification portion, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of each of the plurality of segments from the outlet-side end face along the axial direction of the cells, the modification portion having the porosity lower than that of the base material by 2 to 20% and the average pore size smaller than that of the base material by 0.1 to 10 µm.

2. A honeycomb structure according to claim 1, wherein the modification portion has a uniform length, a uniform porosity, and a uniform average pore size in all of the plurality of segments.

3. A honeycomb structure according to claim 1, wherein the plurality of segments include peripheral segments located in a periphery of the honeycomb structure, and central segments located inside the peripheral segments, the peripheral segments and the central segments being different in at least one of the length, the porosity, and the average pore size of the modification portion.

4. A honeycomb structure formed by combining and integrally bonding a plurality of segments having a honeycomb-shape in which a plurality of cells that serve as fluid passages being partitioned by porous partition walls between an inlet-side end face that serves as a fluid inlet and an outlet-side end face that serves as a fluid outlet, in a direction perpendicular to an axial direction of the cells, the plurality of segments including peripheral segments located in a periphery of the honeycomb structure and central segments located inside the peripheral segments; the peripheral segments consisting of a base material which is porous and honeycomb-shaped; at least some of the central segments comprising the base material and a modification portion and rest of the central segments consisting of the base material as same as the peripheral segments, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of the central segments from the outlet-side end face along the axial direction of the cells, the modification portion having the porosity lower than that of the base material by 2 to 20% and the average pore size smaller than that of the base material by 0.1 to 10 µm.

5. A honeycomb structure having a plurality of cells that serve as fluid passages and are partitioned by porous partition walls between an inlet-side end face that serves as a fluid inlet and an outlet-side end face that serves as a fluid outlet, the honeycomb structure comprising a base material which is porous and honeycomb-shaped and a modification portion, the modification portion being formed by impregnating a part of the base material with a slurry that contains particles smaller than an average pore size of the base material, and heating the base material; the base material having a porosity of 30 to 80% and the average pore size of 5 to 40 µm; and the modification portion being formed within a length of one-tenth to half of a total length of the honeycomb structure from the outlet-side end face along an axial direction of the cells, the modification portion having the porosity lower than that of the base material by 2 to 20% and the average pore size smaller than that of the base material by 0.1 to 10 µm.

6. A honeycomb structure according to claim 5, wherein the modification portion has a uniform length, a uniform porosity, and a uniform average pore size over the entire honeycomb structure in a diametrical direction.

7. A honeycomb structure according to claim 5, wherein at least one of the length, the porosity, and the average pore size of the modification portion changes successively or stepwise from a center to a periphery of the honeycomb structure.

8. A honeycomb structure having a plurality of cells that serve as fluid passages and are partitioned by porous partition walls between an inlet-side end face that serves as a fluid inlet and an outlet-side end face that serves as a fluid outlet, the honeycomb structure comprising a base material which is porous and honeycomb-shaped and a modification portion, the modification portion being formed by impregnating a part of the base material with a slurry that contains particles smaller than an average pore size of the base material, and heating the base material; and the modification portion being formed within a length of one-tenth to half of a total length of the honeycomb structure from the outlet-side end face along an axial direction of the cells, the modification portion being formed within an area excluding a range of one-tenth to three-fifths of a radius of the honeycomb structure from a periphery to a center of the honeycomb structure, and having a porosity lower than that of the base material by 2 to 20% and the average pore size smaller than that of the base material by 0.1 to 10 µm.

9. A honeycomb structure according to any one of claims 1 to 8 comprising plugging portions, wherein openings of given cells on the inlet-side end face are plugged, and openings of remaining cells on the outlet-side end face are plugged.

10. A honeycomb structure according to claim 9, wherein the inlet-side end face has an aperture ratio higher than that of the outlet-side end face.

11. A honeycomb structure according to any one of claims 1 to 10, wherein the partition walls carry a catalyst component.
